# EUROPEAN PATENT APPLICATION

(11) **EP 2 741 216 A1**
(43) Date of publication of application: **11.06.2014**
(21) Application number: 12820636.4
(22) Date of filing: 27.07.2012
(51) Int. Cl.: G06F 17/24

(54) **DOCUMENT COLLABORATION METHOD**

(30) Priority: 04.08.2011 CN 201110222433
(71) Applicant: Yozosoft Co. Ltd., Jiangsu 214135 (CN)
(72) Inventor: MO, Xiaoqiang, Wuxi Jiangsu 214135 (CN)
(74) Representative: Sun, Yiming
(86) International application number: PCT/CN2012/079239
(87) International publication number: WO 2013/017038

(57) **Abstract**

The invention discloses a document collaboration method, which applies a plurality of clients to process a document located on a server collaboratively. The document comprises a plurality of document fragments. The document collaboration method comprises the following steps: each client selects a document fragment which has not been selected by other clients in the document to edit, and sends the edited data relevant to the document to the server; and, the server forwards the data to other clients. Compared with the prior art, the document collaboration method in the present invention has the following advantages that a collaboration document is divided into several document fragments, and only one client has an exclusive permission to edit the document fragments at a same moment, thus no conflict will be caused when a plurality of users modify the same content.

## Description

### BACKGROUND OF THE INVENTION

### 1. Field of the Invention

The present invention relates to the field of office applications, particularly to a document collaboration method for processing a document collaboratively by a plurality of users.

### 2. Description of Related Art

In the modern world, office software has been more involved in every aspect of the daily office work. Office software, such as Word, Excel and PPT, greatly promotes the implementation of paperless office. However, with the continuous development of internet and computer technology, providing a more efficient and faster office platform for users by networked office and cloud computing office becomes possible.

An enterprise generally has multiple departments, and each of the departments has many employees. Consequently, in the current daily office work in enterprises, an enterprise often encounters a lot of inconvenience when multiple departments or employees are required to process a document collaboratively. For example, if an enterprise needs to write a business plan, not only the research & development department is required to propose novel project ideas, the technology department is required to provide technical supports for the project ideas, the marketing department is required to provide analysis on market prospect, cost and benefit of the project ideas, and the finance department is required to provide investment budget and financing planning of the project ideas, and so on. Because chapters in the business plan are associated with each other, the coordination and information symmetry between departments cannot be realized very well by conventional office methods.

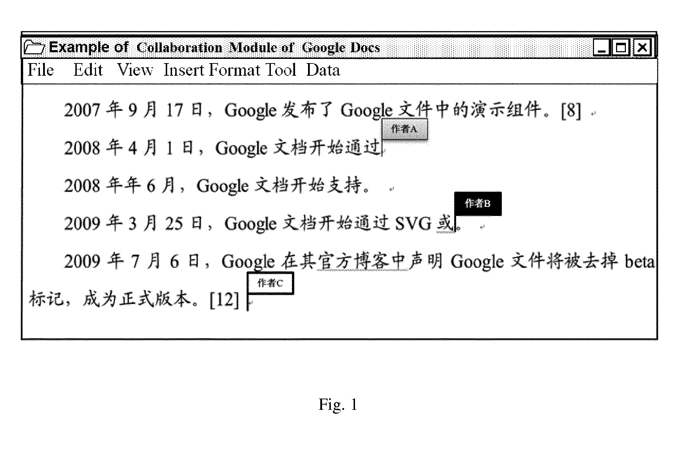

At present, although various collaboration platforms have been introduced with regard to the problems mentioned above, solutions for conventional collaboration platforms are mostly as follows: each department or employee writes a part of a document separately, and then the written documents are merged differently according to the difference of all the written documents. However, such conventional collaboration platforms are not a real sense of multi-user real-time collaboration systems in spite of the use of a B/S ("Browsers + Servers") structure. At present, the excellent collaboration platforms mainly are the cloud computing office software Office 365 from American Microsoft Corporation and the collaboration component in the Google Docs from American Google Inc, of which, the cloud computing office software Office 365 from Microsoft Corporation supports "Save + Update" for collaboration. In other words, when a plurality of users edit a document collaboratively at the same time, the related operations of the current user to the document will be uploaded to the server and updated to other collaboration users only after the current user clicks Save, and multiple versions of the document will be stored according to the save operation of each user. Apparently, such collaboration way has the following two disadvantages: first, the modification of a user to the document is passively updated to the server, so it is likely to lead to update not in time; and second, content conflict will be caused if two users modify the content of a same part and then click Save, so it is quite inconvenient for users. While the collaboration component in the Google Docs from American Google Inc. supports other two collaboration ways. The collaboration component in the early Google Docs supports a collaboration way of automatically updating the modification of each collaboration user to the document at preset time intervals. However, such collaboration way has the following disadvantage: as the update time is unknown for users, it is likely to update suddenly during the editing of a user, for example, loss of several rows of words or addition of several words may occur, thus the creation of a user will be disturbed and content conflict may occur. The collaboration way of the collaboration component in the late Google Docs is a real sense of multi-user real-time collaboration, i.e., "update followed by cursor word by word". Specifically, there are multiple cursors in the browser window of each user with each cursor corresponding to a user in editing, the modification of any user to the document is updated and displayed word by word to other users, as shown in Fig. 1. In other words, each user can observe the modification process of other users to the document in real time. Although this collaboration way is relatively ideal and successful, such collaboration way still has the following two disadvantages: first, as there are multiple cursors in the browser window of a user and these cursors move as other users operate, these moving cursors will disturb the creation of a user to a some extent; and second, the implementation of such collaboration way requires a stable and fast network and a high-efficiency browser, good effects cannot be achieved in some poor implementation environments.

Therefore, it is necessary to provide a new technical solution to solve the above problems.

### SUMMARY OF THE INVENTION

A technical problem to be solved by the present invention is to provide a document collaboration method which can not only allow a plurality of users to edit a document collaboratively in real time and also avoid content conflict.

To solve the above problems, the present invention provides a document collaboration method for processing a document comprising a plurality of document fragments and being located in a server collaboratively by a plurality of clients, the method comprises: selecting one document fragment which has not been selected by other clients in the document to edit, and sends edited data relevant to the document to the server by one client; and forwarding the edited data to other clients by the server.

Further, the document fragments are obtained by dividing the document in unit of one or more of page, title, chapter, paragraph, row, sentence, label, cell or input box.

Further, when a cursor of one client stays within one document fragment in the document, it is indicated that the client selects the document fragment; and when the cursor of one client leaves the selected document fragment, it is indicated that the client finishes editing and deselects the document fragment.

Further, when one client selects one document fragment, the selected document fragment cannot be selected by other clients before deselected.

Further, each client sends the edited data relevant to the document to the server only after finishing editing the selected document fragment.

Further, the edited data relevant to the document is operational data generated during editing.

Further, one client generates the operating data according to the type of operating commands used for editing, operating objects and/or operating contents when editing the selected document fragment, and encapsulates the operating data into a data packet and then sends the data packet to the server after finishing editing.

Further, the type of operating commands comprises select, edit, revise, review, remark and save.

Further, the server forwards the data packet containing the operating data from one client to other clients, and the other clients receive the data packet, analyze the data packet into corresponding operating data, and then update a display of the document with the operating data.

Further, when sending the data packet to other clients, the server sends the data packet to other currently online clients only.

Further, when selecting or inviting other clients to process the document collaboratively, one client judges whether the document is located in the server; and if not, the client uploads the document to the server and shares with other clients.

Further, when one client selects one document fragment, the server highlights the document fragment to other clients.

Further, the highlighting includes one or more of shadowing, changing background color, changing foreground color, changing text color and adding text information.

Compared with the prior art, the document collaboration method in the present invention has the following advantages that a collaboration document is divided into several document fragments, and only one client has an exclusive permission to edit the document fragments at a same moment, thus no conflict will be caused when a plurality of users modify the same content.

### BRIEF DESCRIPTION OF THE DRAWINGS

The present invention will be better understood with reference to the accompanying drawings and the following detailed description, in which like reference symbols designate the same or similar parts. In the figures:
FIG. 1 is an implementation diagram when a collaboration component in an existing Google Docs performs multi-user real-time collaboration;
FIG. 2 is a structure diagram of an implementation environment of a document collaboration method according to one embodiment of the present invention;
FIG. 3 is a flowchart of the document collaboration method according to one embodiment of the present invention;
FIG. 4A and Fig. 4B are application examples of the document collaboration method according to one embodiment of the present invention; and
Fig. 5 is a flowchart of the document collaboration method in another embodiment of the present invention.

### DETAILED DESCRIPTION OF THE INVENTION

To make the above objects, characteristics and advantages of the present invention clearer, the present invention will be described as below in details with reference to the accompanying drawings and specific implementations.

The detailed description of the present invention is presented largely in terms of procedures, steps, logic blocks, processes, or other symbolic descriptions that directly or indirectly resemble the operations of technical solutions in the present invention. These descriptions and representations are typically used by those skilled in the art to most effectively convey the substance of their work to others skilled in the art.

Reference herein to "one embodiment" or "an embodiment" means that a particular feature, structure, or characteristic described in connection with the embodiment can be included in at least one implementation of the present invention. The appearances of the phrase "in one embodiment" in various places in the specification are not necessarily all referring to the same embodiment, nor are separate or alternative embodiments mutually exclusive of other embodiments. Further, the order of modules in methods, flowcharts or functional diagrams representing one or more embodiments of the present invention does not inherently indicate any particular order nor imply any limitations in the present invention.

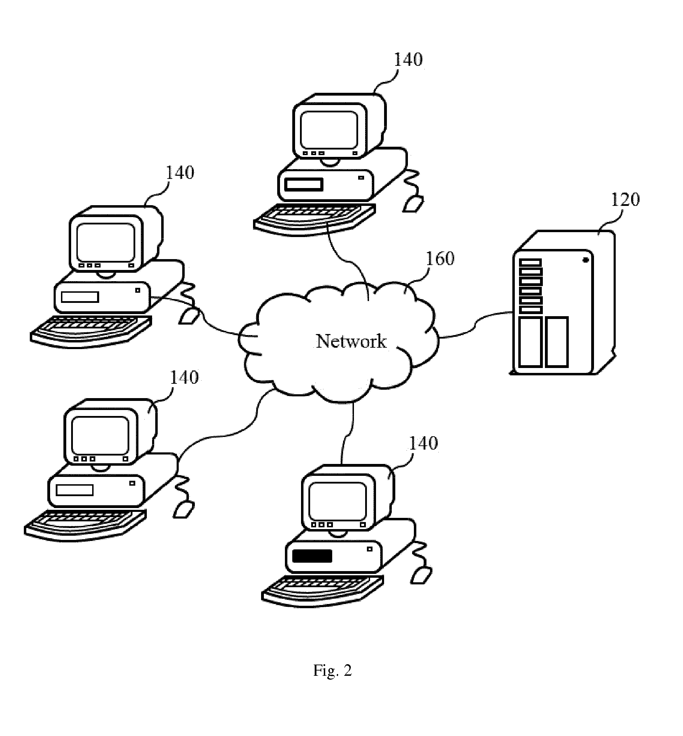

Referring to Fig. 2, a structure diagram of an implementation environment of a document collaboration method according to one embodiment 200 of the present invention is shown. The implementation environment 200 comprises a server 120 and a number of clients 140 in communication with the server 120 over a network 160. The network 160 may include a Local Area Network (LAN), a Wide Area Network (WAN), a mobile communication network, a Public Switched Telephone Network (PSTN) or combinations thereof. For simplicity, Fig. 2 only shows four clients 140 and one server 120, but it may be recognized that there may be more clients and more servers in practices.

The clients 140 may include a personal computer, a notebook computer, a tablet computer, a smartphone, a Personal Digital Assistant (PDA) or other information processing equipment. Browsers, predetermined client software or plug-ins are run in such information processing equipment. A lead author, for example, a department head or project director, may create and cancel a collaboration group via the client 140. In the process of creating the collaboration group, the lead author may select or invite a number of other clients 140 as collaborators, and distribute the related permissions of a collaborative document to each collaborator, for example, the permissions to view, edit, review, revise and remark said collaborative document. The collaborators, for example, employees or technical support personnel, may edit the collaborative document via the clients 140. During the specific collaboration, the collaborative document may be divided into a plurality of document fragments. For example, each paragraph as a document fragment. one client 140 of the collaborative document may select one or more such document fragments to edit at a same moment, e.g., insert or delete text and data, set paragraph format, and so on. When or after the client 140 edits the document fragment, edited data relevant to the document fragment will be forwarded to other clients 140 of the collaborative document via the server 120. Then, other clients 140 update the display of the collaborative document with the edited data.

The server 120 may be a computer, a dedicated server or a cloud computing service module, etc. The server 120 is mainly configured to store and manage the collaborative document, distribution of permissions of each collaborative document and related information of each client 140. The server 120 may also selectively forward corresponding operating data to each client 140 according to a online state of each client.

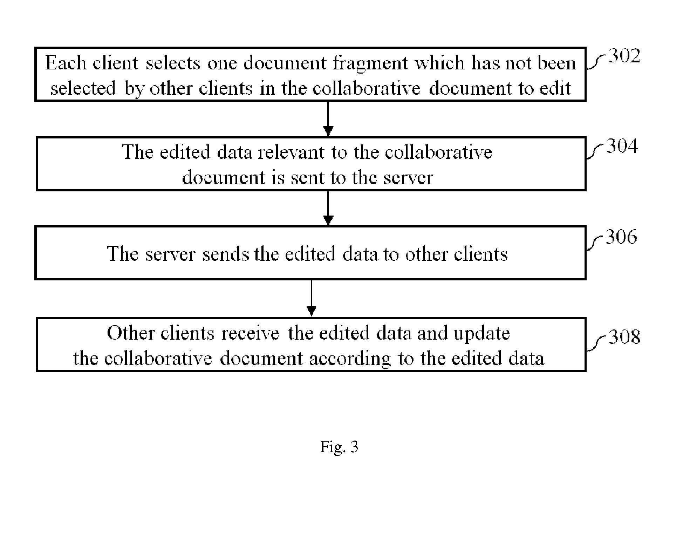

Referring to Fig. 3, a flowchart of the document collaboration method according to one embodiment 300 of the present invention is shown. The document collaboration method 300 is provided for processing a collaboration document located in a server by a plurality of clients simultaneously. The collaborative document comprises a plurality of document fragments. These document fragments may be a page of text, a part of text under a title, a part of text in a chapter, a paragraph of text, a line of text, a sentence of text, contents between two same punctuations or symbols, a cell or an input box, and so on. The document collaboration method 300 comprises the following steps.

S302: Each client selects one document fragment which has not been selected by other clients in the collaborative document to edit.

To avoid conflicts caused when a plurality of users edit the content of a same document fragment, each client may select one document fragment which has not been selected by other clients in the collaborative document to edit. In a specific embodiment, after selected by a client, the document fragment is highlighted to other clients so that other clients know that the document fragment is being edited. In another embodiment, in the process of highlighting the document fragment, information about the user who is editing the document fragment is also displayed. For example, words "Being edited by user XX..." are displayed in the blank of the document fragment. Furthermore, the document fragment cannot be selected when highlighted.

S304: The edited data relevant to the collaborative document is sent to the server.

When or after editing one document fragment, the client may send the edited data relevant to the collaborative document generated during editing to the server. The relevant data may be data of the latest version of the modified document fragment, and may also be operating data generated during editing, and so on. In short, other clients may know the content edited by the current client according to the edited data relevant to the collaborative document.

S306: The server sends the edited data to other clients.

After receiving the edited data relevant to the collaborative document, the server may update the collaborative document with the edited data, but the server also needs to send the edited data to other clients so that other clients can also update the collaborative document.

S308: Other clients receive the edited data, and update the collaborative document according to the edited data.

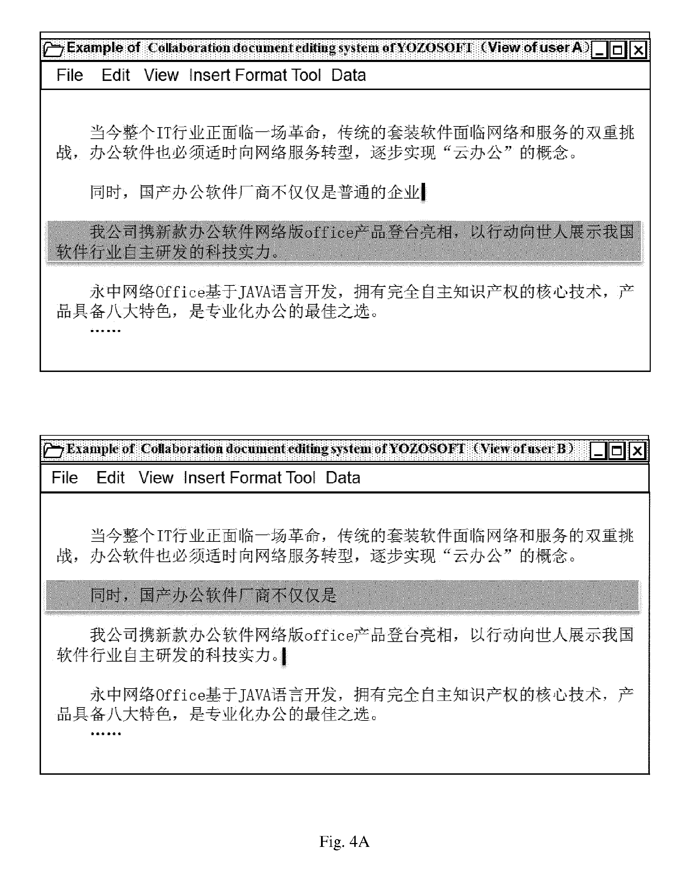

After receiving the edited data, other clients may know the content edited by the current client and may update and display the collaborative document according to the edited data. In a specific embodiment, a user A and a user B edit a Word document collaboratively by this document collaboration method. When the user A is editing the second paragraph in page X, the second paragraph in page X of the collaborative document may be highlighted to the user B, as shown by the operation of shadowing in Fig. 4A. Highlighting includes shadowing, changing background color, changing foreground color, changing text color, shadowing with information about the author and the like. In this way, the user B may know that the document fragment is being edited by other users. Meanwhile, a cursor of the user B is unable to move onto this document fragment. Similarly, for the user A, the third paragraph in page X being edited by the user B is also in shadow.

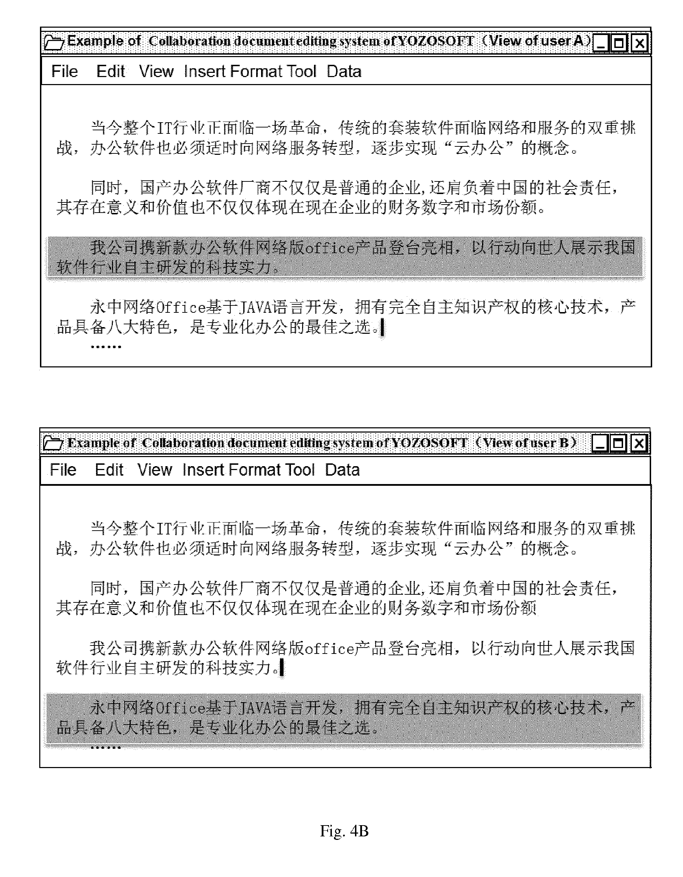

After the user A has edited the second paragraph in page X and then edits the fourth paragraph in page X, for the user B, the second paragraph in page X of the collaborative document will not in shadow and will be updated and displayed in a version modified by the user A, while the fourth paragraph in page X being edited by the user A will be changed into shadow, i.e., locked so that the cursor is unable to move onto this paragraph, as shown in Fig. 4B. Considerably, one client can only select one document fragment which has not been selected by other clients to edit, so the document collaboration method will not have conflicts caused when a plurality of users modify the same content.

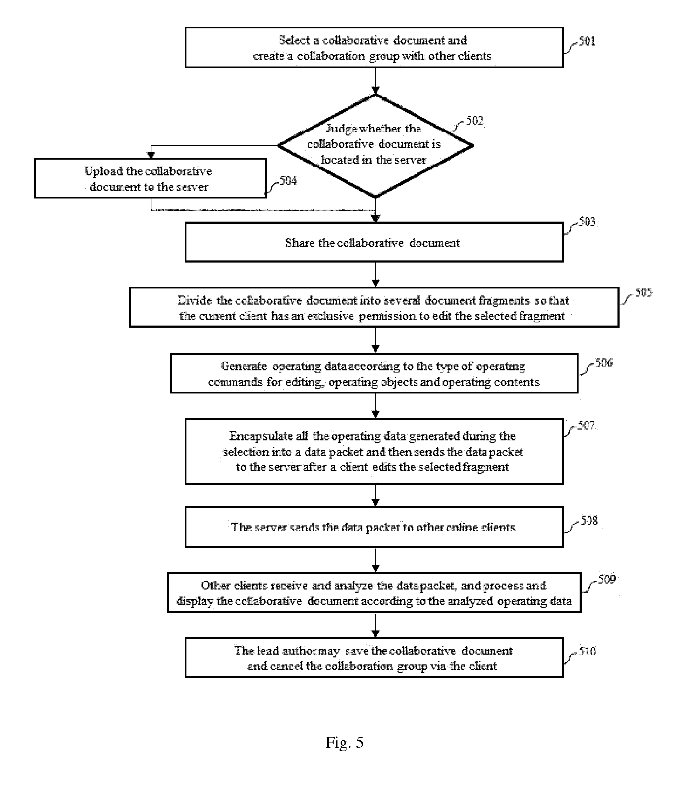

To describe many aspects and more details of the present invention, please continue to refer to Fig. 5. Fig. 5 shows a flowchart of the document collaboration method according to another embodiment 500 of the present invention. The document collaboration method 500 comprises the following steps.

S501: A client selects a collaborative document and creates a collaboration group with other clients.

When in need of initiating multi-user collaboration to a certain document, a lead author may select a document to be collaborated and invite other users via a client in order to create a collaboration group. The selected collaborative document may be one of a Word document, a spreadsheet or a PowerPoint. Other users may directly or selectively join in the collaboration group via other clients. Furthermore, the lead author may designate permissions of collaborators to the collaborative document when creating the collaboration group. For example, a collaborator A has permissions to view, edit, revise, review and remark the collaborative document; and, a collaborator B has permissions to view and edit the collaborative document, and so on.

S502: It is judged whether the collaborative document is located in the server; if so, proceed to S503 of sharing the collaborative document; and if not, proceed to S504 of uploading the collaborative document to the server and then sharing it with the related clients.

When the collaboration group is created, the collaborative document is generally a local document located in the client of the lead author or a document created temporarily by the lead author, in this case, it is required to upload the collaborative document to the server and share it with the clients of the related collaborators. In a specific embodiment, the server may comprise a plurality of spaces for storing documents of users, for example, "My Space" for storing private documents, "Group-shared Space" for storing the shared documents of a group and "Shared Space for Collaboration" for storing documents to be collaborated. If the collaborative document is stored in "My Space" in the server where only the lead author owns all permissions before the collaboration group is created, when the collaboration group is created, it is required to move or copy the collaborative document from "My Space" to "Space for Collaboration" and share the collaborative document with each collaborator according to the permission distribution designated by the lead author. In other words, the main reason of judging whether the collaborative document is located in the server is to meet the demand of sharing. If the collaborative document is unable to be shared with other clients although stored in the server, the collaborative document should also be first moved or copied to a storage location allowing sharing with other clients.

S505: The collaborative document is divided into several document fragments; and when a cursor of the current client stays within one document fragment in the collaborative document, the document fragment is selected by the client and the current client has an exclusive permission to edit the document fragment once it is selected.

To be convenient for collaboration, the collaborative document may be divided into several document fragments. The document fragments are obtained by dividing the collaborative document in unit of one or more of page, title, chapter, paragraph, row, sentence, label, cell or input box. If the collaborative document is a new blank document, each blank row may be regarded as a document fragment. Furthermore, in the subsequent editing process, an unedited blank row and a blank row generated by deleting data may also be regarded as a document fragment. "Plurality" and "Several" herein comprise two, three and more than three. Each client may select a document fragment which has not been selected by other clients to edit. In one embodiment, the collaborative document is a Word document and divided into several document fragments in unit of paragraph. When the cursor of a client stays within one paragraph, the paragraph will be selected by the client. In general, the current client has an exclusive permission to edit the selected document fragment, while other clients only have a permission to view this document fragment at this moment. This process may be implemented by triggering and sending to the server operating data with a command type of setting permissions of a document fragment, so that the server distributes and manages the related permissions of the document fragment. The exclusive edit permission of the current client may be all edit permissions including common edit, revise, review and remark in a board sense, or common edit permission not including revise, review and remark in a narrow sense.

S506: Operating data is generated according to the type of operating commands for editing, operating objects and operating contents.

When one document fragment is selected, the client selecting the document fragment may edit related contents in the document fragment freely. For example, the client may perform operations to the collaborative document, such as select, insert, replace, search, set font format, set paragraph format, input formulae, revise, view and remark. The client generates operating data according to the type of operating commands for editing, operating objects and operating contents. The operating commands comprise select, edit, revise, review, remark, save and permission set. The operating objects generally are part or all of contents in the selected document fragment. The operating user is the current client. The operating contents comprise text inserted, text replaced during revising, text remarked or specific contents under other operation commands. For example, if the operation of the user A is to replace 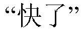 in the third row of paragraph Y in page X with 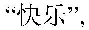 the type of the operating command is "Replace", the operating object is 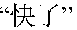 in the third row of paragraph Y in page X or the storage location corresponding to 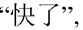 the operating content is 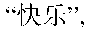 and the operating user is the user A. Certainly, information specifically contained in the operating data may be one or more of the type of operating commands, operating objects, operating user and operating contents, and even may comprise other information. It is to be noted that the operating commands relevant to selecting, editing, revising, reviewing, remarking and saving are common edit operations of a user during editing, while the operating command of setting permissions in one embodiment comprises: related commands which are triggered to acquire or monopolize the edit permission of the document fragment when the cursor of one client moves onto a document fragment, and related commands which are triggered to release the edit permission of the document fragment when the cursor of a client leaves a document fragment.

S507: After editing the selected fragment, the client encapsulates all the operating data generated during the selection into a data packet and then sends the data packet to the server.

On one hand, in order to timely update the modification of one client to the document to other clients; and on the other hand, in order to simplify the update process and fit with the habit of a user in editing, when the cursor of the current client moves out from the selected document fragment, it may be considered that the client edits and deselects the document fragment. The client encapsulates all or most of operating data generated when the user edits the document fragment during the selection into a data packet and then sends the data packet to the server. This data packet may also comprise operating data with the command type of releasing the edit permission of the document fragment, so that the edit permission of the document fragment is released. Considering that if the cursor of the current client moves onto another document fragment when staying outside of the document fragment, the operating data of obtaining the edit permission of another document fragment will be generated. However, it should be recognized that the operating data of a user generated during the selection generally refers to all operating data relevant to selecting, editing, revising, reviewing, remarking and saving the document fragment, but does not include operating data of setting permissions of the document fragment. Therefore, the operating data relevant to setting permissions of a document fragment may not be encapsulated into the data packet and sent simultaneously. Specifically, the operating data for acquiring the edit permission of another document fragment may not be sent together with the data packet, while the operating data for releasing the edit permission of the selected document fragment may be sent together with the data packet. With the update way in this step, for a user, when a document fragment which has been selected by other clients is released, the latest version of the document fragment will be displayed immediately, so that the user may directly view the final version of the document fragment without needing to watch the specific process of other clients editing the document fragment.

S508: The server sends the data packet to other online clients.

After receiving the data packet, the server needs to forward the data packet to other clients. In one embodiment, information about whether a client is online may be stored in the server, so that the server selectively sends the data packet to the currently online clients only rather than offline clients.

S509: Other clients receive and analyze the data packet, and process and display the collaborative document according to the analyzed operating data.

Because the collaborative document is edited by a plurality of users collaboratively, each user needs to acquire the creation contents of other users to the collaborative document. When receiving the data packet from the current client, other clients analyze the data packet into one or several operating data, and then process the collaborative document according to the operating data, so that the collaborative document is updated to the latest version and then displayed. For example, if the client of the user B receives a data packet from the user A, there is one operating data contained in the data packet as follows: the type of the operating command is "Replace", the operating object is 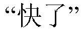 in the third row of paragraph Y in page X, the operating content is 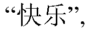 and the operating user is the user A. The client of the user B searches 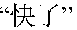 in the third row of paragraph Y in page X according to the operating object, and then replaces 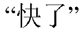 with the operating content 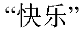 according to the operating command type "Replace", and finally updates the author information and version information relevant to this part according to the operating user of the user A.

Apparently, each client repeats S505 to S509 to perform the collaboration process. At the end of collaboration, proceed to S510: the lead author may save the collaborative document via the client and then cancel the collaboration group. Of course, the collaborative document may also be saved by other clients. During the process of canceling the collaboration group, it is also required to redistribute and release the permissions of the collaborative document, for example, release the edit permission of other collaborators, but remain the view permission, etc.

In conclusion, the document collaboration method applies a collaboration way of dividing the document into a plurality of document fragments and enabling each client to select only one document fragment which has not been selected by other clients in the document to edit, so that the conflict easily caused in other collaboration ways when a plurality of users modify the same content is effectively avoided. Meanwhile, the document collaboration method also applies a way of automatically updating the related operating data to the selected document fragment of one client to other clients after the client edits the selected document fragment, so that collaborators basically realize perfect real-time collaboration. Furthermore, during the update process, the transmitted data packet is operating data generated when one user edits the selected document fragment rather than data information of the whole or a part of the collaborative document, so the volume of data to be transmitted is relatively small and the amount of calculation required by other clients for updating and displaying is also reduced greatly. In addition, it is to be noted that, although the cursor moving onto and moving out from the document fragment is regarded as a way of selection in the foregoing description, the selection of the document fragment is not limited to such way. For example, when in need of setting the paragraph format of a plurality of document fragments, a user may select several document fragments at a same moment in the way of dragging by a mouse, but these document fragments must be those have not been selected by other clients.

Certainly, in a further embodiment, a version control mechanism may also be added into the document collaboration method, so that information about the version of the collaborative document can be presented according to the modifications of different collaborators at different times. An instant communication mechanism may also be embedded in the document collaboration method, so that each collaborator can carry out peer-to-peer sessions or multi-peer sessions during the collaboration via the instant communication mechanism, which is convenient to discuss details of the collaboration.

The present invention has been described in sufficient details with a certain degree of particularity. It is understood by those skilled in the art that the description of embodiments has been made by way of examples only and that numerous changes made without departing from the spirit and scope of the invention as claimed shall fall into the protection scope of the present invention. Accordingly, the scope of the present invention is defined by the appended claims rather than the foregoing description of embodiments.

## Claims

1. A document collaboration method for processing a document comprising a plurality of document fragments and being located in a server collaboratively by a plurality of clients, the method comprising:
selecting one document fragment which has not been selected by other clients in the document to edit, and sends edited data relevant to the document to the server by one client; and
forwarding the edited data to other clients by the server.

2. The document collaboration method according to claim 1, wherein the document fragments are obtained by dividing the document in unit of one or more of page, title, chapter, paragraph, row, sentence, label, cell or input box.

3. The method according to claim 1, wherein when a cursor of one client stays within one document fragment in the document, it is indicated that the client selects the document fragment; and when the cursor of one client leaves the selected document fragment, it is indicated that the client finishes editing and deselects the document fragment.

4. The document collaboration method according to claim 3, wherein when one client selects one document fragment, the selected document fragment cannot be selected by other clients before deselected.

5. The document collaboration method according to any one of claims 1 to 4, wherein each client sends the edited data relevant to the document to the server only after finishing editing the selected document fragment.

6. The document collaboration method according to claim 5, wherein the edited data relevant to the document is operational data generated during editing.

7. The document collaboration method according to claim 6, wherein one client generates the operating data according to the type of operating commands used for editing, operating objects and/or operating contents when editing the selected document fragment, and encapsulates the operating data into a data packet and then sends the data packet to the server after finishing editing.

8. The document collaboration method according to claim 7, wherein the type of operating commands comprises select, edit, revise, review, remark and save.

9. The document collaboration method according to claim 7, wherein the server forwards the data packet containing the operating data from one client to other clients, and the other clients receive the data packet, analyze the data packet into corresponding operating data, and then update a display of the document with the operating data.

10. The document collaboration method according to claim 9, wherein when sending the data packet to other clients, the server sends the data packet to other currently online clients only.

11. The document collaboration method according to claim 1, wherein when selecting or inviting other clients to process the document collaboratively, one client judges whether the document is located in the server; and if not, the client uploads the document to the server and shares with other clients.

12. The document collaboration method according to claim 3, wherein when one client selects one document fragment, the server highlights the document fragment to other clients.

13. The document collaboration method according to claim 12, wherein the highlighting includes one or more of shadowing, changing background color, changing foreground color, changing text color and adding text information.
